(19) Europäisches Patentamt

European Patent Office

Office européen des brevets

(11) Veröffentlichungsnummer: **0 290 846 B1**

(12) # EUROPÄISCHE PATENTSCHRIFT

(45) Veröffentlichungstag der Patentschrift:
27.03.91 Patentblatt 91/13

(21) Anmeldenummer: **88106549.4**

(22) Anmeldetag: **23.04.88**

(51) Int. Cl.⁵: **F24D 11/00**

(54) Fernwärme-Uebernahmestation.

(30) Priorität: **12.05.87 CH 1809/87**

(43) Veröffentlichungstag der Anmeldung:
**17.11.88 Patentblatt 88/46**

(45) Bekanntmachung des Hinweises auf die
Patenterteilung:
**27.03.91 Patentblatt 91/13**

(84) Benannte Vertragsstaaten:
**AT CH DE FR GB IT LI NL SE**

(56) Entgegenhaltungen:
**EP-A- 0 092 225**
**DE-A- 2 128 480**
**DE-A- 3 123 875**
**FR-A- 2 496 857**

(73) Patentinhaber: **Steinemann AG**
**Wilerstrasse 111**
**CH-9230 Flawil (CH)**

(72) Erfinder: **Briner, Theo**
**Alpsteinstrasse 12**
**CH-9240 Uzwil (CH)**

(74) Vertreter: **Petschner, Goetz**
**Patentanwaltsbüro G. Petschner Seidengasse**
**18**
**CH-8001 Zürich (CH)**

## Beschreibung

Die vorliegende Erfindung betrifft eine Fernwärme-Uebernahmestation zur Erwärmung von Heizungswasser in einem Verbraucher-Kreislauf, mit einem Wärmetauscher zur Wärmeübertragung von einem Fernwärmemedium, insbesondere Wasser, auf das Heizungswasser.

Eine derartige Anlage ist durch die DE-A-3 123 875 bekannt geworden, welche eine Fernwärmenutzung bis etwa 60 KW Leistung gestatten, was ausreicht, für Wohnungen und kleinere Häuser eine saubere und energiesparende Heizung und Brauchwasser-Erwärmung zu gewährleisten. Ebenso lässt sich so Wärme für chemische Prozesse etc. gewinnen.

Um darüber hinaus Leistungen zu erzielen, etwa im Bereich bis 800 KW und mehr, die gestatten, Wohnblocks, Schulhäuser, Kirchen, Bürohäuser u. dgl. zu beheizen und mit Brauchwarmwasser zu versorgen, sind neue Konzeptionen solcher Anlagen notwendig, die die zur Verfügung stehende Energiemenge optimal nützen und die die zu verrechnende durchlaufende Fernwärmewasser-Menge gering halten.

Diese Aufgabe wird erfindungsgemäss gelöst durch die Merkmale des Patentanspruches 1.

Damit wird es möglich, den bisher unmittelbar auf den Wärmeaustausch im Wärmetauscher zwischen Verbraucher-Kreislauf und Fernwärmewasser-Kreislauf einwirkenden Verbraucher-Rücklauf als unbestimmten, einen Ueberverbrauch an Fernwärmewasser verursachenden Parameter auszuschliessen, indem die beiden Regelkreise automatisch einen sich selbst erhaltenden mittleren Betriebszustand unter optimaler Nutzung der zur Verfügung stehenden Energiemenge bewirken.

Ein gleiches Ergebnis wird bei einer Ausführungsform mit den Merkmalen des Patentanspruches 2 erreicht.

Weitere Merkmale und Vorteile des Erfindungsgegenstandes ergeben sich aus den beispielsweisen Ausführungsformen, die nachfolgend anhand der Zeichnung näher erläutert sind. Es zeigen :

Fig. 1 eine erste Ausführungsform der erfindungsgemässen Fernwärme-Uebernahmestation in einem Funktionsschema ; und

Fig. 2 eine weitere Ausführungsvariante der Anordnung gemäss Fig. 1.

Die Fernwärme-Uebernahmestation dient der Erwärmung von Heizungswasser für einen Verbraucher-Kreislauf 1, der hier nur durch einen Verbraucher-Vorlauf 11 und einen Verbraucher-Rücklauf 12 angedeutet ist. Zwischen diesem Vor- und Rücklauf sind dann in üblicher Weise Hausheizungs- und Boilerheizkreise parallelgeschaltet, was hier nicht näher zu erläutern ist.

Die Wärmeübertragung vom Fernwärmewasser oder anderer Medien, dessen Kreislauf durch einen Vorlauf 3 und einen Rücklauf 4 angedeutet ist, erfolgt auf das Heizungswasser in bekannter Weise mittels eines Wärmetauschers 2, etwa in Form eines im Gegenstrom arbeitenden Doppelrohr-Wärmetauschers o. dgl.

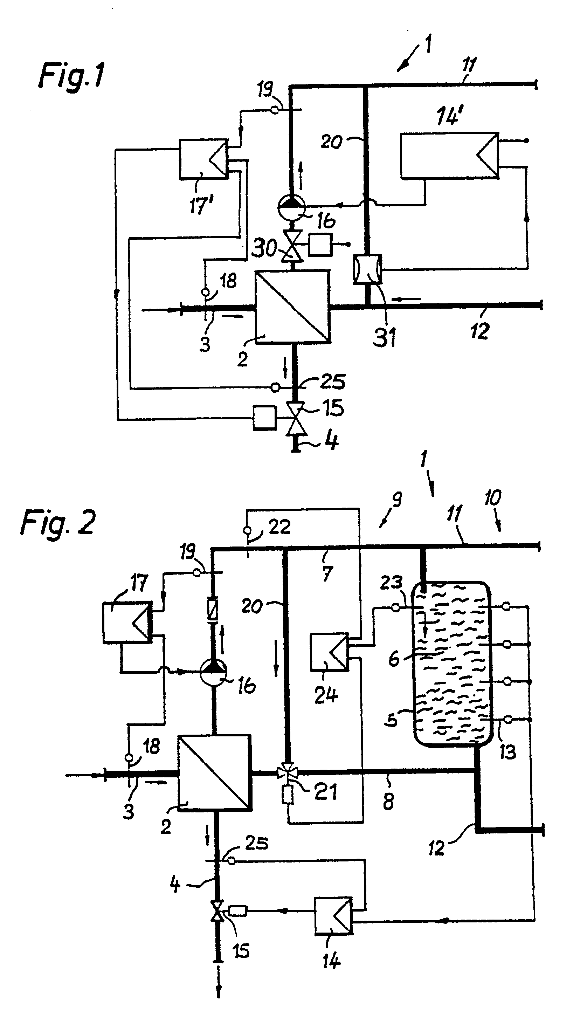

Eine erste, relativ einfache aber wirksame Anordnung der Fernwärme-Uebernahmestation umfasst gemäss Fig. 1 einen ersten, von Temperaturfühlermitteln 19 im Verbraucher-Kreislauf 1 gesteuerten Regelkreis 17' zur Regulierung der Temperatur im Verbraucher-Kreislauf 1 über ein Durchfluss-Regelventil 15 im Fernwärme-Kreislauf 3, 4. Der Regelkreis 17' ist dabei vorzugsweise eine Temperatur-Differenz-Regelstufe, die für entsprechende Referenzsignale mit weiteren Temperaturfühlern 18 und 25 im Fernwärme-Vorlauf 3 resp. im Fernwärme-Rücklauf 4 in Wirkungsverbindung steht.

Ferner ist erfindungsgemäss ein zweiter, differenzgesteuerter Regelkreis 14' vorgesehen, welcher der Regulierung des Durchflusses im Verbraucher-Kreislauf 1 dient und hierfür eine drehzahlvariable, verbraucherseitige Umwälzpumpe 16 steuert. Auch dieser Regelkreis 14' ist eine Differenz-Regelstufe mit einem Sollwert in Form eines Null-Signals. Diese Differenz-Regelstufe 14' ist für ihr Regelsignal mit einem Durchfluss-Bypass 31 in einer Parallelleitung 20 elektrisch verbunden.

Durch diese Massnahmen wird der Fernwärmeverbrauch exakt geregelt, wobei sich, wie nun ohne weiteres erkennbar, innerhalb der Extremzustände, nämlich abgestellte Anlage (Heizungswasser kalt) oder Null-Verbrauch von Heizungswasser (Heizungswasser warm), ein in vorgegebenen Heizungswasser-Temperaturbereichen pendelnder optimaler Betriebszustand einstellt.

Bei der Anordnung gemäss Fig. 2 ist dem Wärmetauscher 2 ein zylinderförmiger Tank 5 nachgeschaltet, der eine Heizungswassersäule 6 umschliesst. Dieser Tank 5 wirkt als trennender Puffer zwischen einem Primär-Kreislauf 9 und einem Sekundär-Kreislauf 10 des Verbraucher-Kreislaufes 1, wobei der Sekundär-Kreislauf 10 den eigentlichen Verbraucher-Kreislauf bildet. Im Einzelnen bildet der Tank 5 einerseits über einen Primär-Vorlauf 7 und einen Primär-Rücklauf 8 mit der Sekundärseite des Wärmetauschers 2 den Primär-Kreislauf 9 sowie andrerseits mit dem Verbraucher-Vorlauf 11 und dem Verbraucher-Rücklauf 12 den Sekundär-Kreislauf 10 des Heizungswasser-Kreislaufes 1, wobei sich im Primär-Kreislauf 9 die Umwälzpumpe 16 befindet und wobei eine Mehrzahl, niveauunterschiedlich am Tank 5 angeordnete Temperaturfühler 13 über eine Steuerstufe 14 das Durchfluss-Regelventil 15 im Fernwärmewasser-Kreislauf 3, 4 steuern. Die Steuerstufe 14 bildet somit den vorerwähnten ersten Regelkreis zur Regulierung der Temperatur im Verbraucher-Kreislauf 1.

Die genannte Umwälzpumpe 16 ist hier im Primär-Vorlauf 7 des Primär-Kreises 9 des Heizungswasser-Kreislaufes 1 angeordnet und von einer weiteren Temperatur-Differenz-Regelstufe 17 drehzahlgeregelt, die mit weiteren Temperaturfühlern 18, 19 am Vorlauf 3 des Fernwärmewasser-Kreislaufes 3, 4 resp. am Primär-Vorlauf 7 des Primär-Kreises 9 des Heizungswasser-Kreislaufes 1 in Wirkungsverbindung steht. Somit bildet die Regelstufe 17 den zweiten Regelkreis zur Regulierung des Durchflusses im Verbraucher-Kreislauf 1. Die derart gesteuerte Umwälzpumpe 16 sorgt dabei entsprechend der festgestellten Temperaturdifferenz zwischen vorlaufendem Fernwärmewasser und vorlaufendem Heizungswasser für eine stufenlos angepasste, eine optimale Wärmeübernahme bewirkende Heizungswasser-Strömungsgeschwindigkeit, wobei eine Rückkopplung durch die Fühlersteuerung des Durchfluss-Regelventils 15 im Fernwärmewasser-Kreislauf, hier in der Rücklaufleitung 4 stattfindet.

Für einen Anlauf des Systems ohne Wirksamkeit auf der Verbraucherseite ist dem zylinderförmigen Tank 5 im Primär-Kreis 9 des Heizungswasser-Kreislaufes 1 eine Rücklaufleitung 20 parallelgeschaltet, welche über ein Umsteuerventil 21 in den Primär-Rücklauf 8 des Primär-Kreises 9 des Heizungswasser-Kreislaufes 1 einmündet. Hierbei ist das Umsteuerventil 21 von einer weiteren Temperatur-Differenz-Regelstufe 24 betätigbar, welche mit weiteren Temperaturfühlern 22, 23 am Primär-Vorlauf 7 des Primär-Kreises 9 des Heizungswasser-Kreislaufes 1 resp. am vorlaufseitigen Niveau des zylinderförmigen Tanks 5 in Wirkungsverbindung steht, um beim Erreichen einer vorbestimmten Vorlauftemperatur auf Betriebszustand umzusteuern.

Wie vorerwähnt, beeinflusst die Stellung des Durchfluss-Regelventils 15 die Funktion der verbraucherseitigen Umwälzpumpe 16, indem über den Temperaturfühler 18 im Fernwärmewasser-Vorlauf 3 ein Rückkopplungssignal an die betreffende Steuerstufe 17 erfolgt.

Beim vorbeschriebenen Anwendungsbeispiel gemäss Fig. 2 sind am Durchfluss-Regelventil 15 vier Stellungen über die Temperaturfühler 13 am Tank 5 ansteuerbar. Hierbei bewirkt von den niveauunterschiedlichen Temperaturfühlern 13 am zylinderförmigen Tank 5 der niveauunterste Fühler bei einer vorgegebenen Höchsttemperatur der Heizungswassersäule 6 eine Schliessung des Durchfluss-Regelventils 15 im Fernwärmewasser-Kreislauf 3, 4 und der niveauhöchste Fühler bei einer vorgegebenen Tiefsttemperatur der Heizungswassersäule 6 eine vollständige Oeffnung des Durchfluss-Regelventils 15, wogegen die niveauzwischenliegenden Temperaturfühler auf vorgegebene Zwischentemperaturen hin unterschiedliche Teilöffnungen, beispielsweise 20% und 60%, des Durchfluss-Regelventils 15 bewirken.

## Ansprüche

1. Fernwärme-Uebernahmestation zur Erwärmung von Heizungswasser in einem Verbraucher-Kreislauf, mit einem Wärmetauscher zur Wärmeübertragung von einem Fernwärmemedium, insbesondere Wasser, auf das Heizungswasser, gekennzeichnet durch eine erste, von einem Temperaturfühler (19) im Verbraucher-Kreislauf gesteuerte Temperatur-Differenz Regelstufe (17') zur Regulierung der Temperatur im Verbraucher-Kreislauf über ein Durchfluss-Regelventil (15) im Fernwärme-Kreislauf, wobei die Regelstufe mit Temperaturfühlern (18, 25) im Vor- und Rücklauf des Fernwärmekreislaufes in Verbindung steht und durch eine zweite Regelstufe (14') zur Regulierung des Durchflusses im Verbraucher-Kreislauf, die mit einer drehzahlvariablen Umwälzpumpe (16) und mit einem Durchfluss-Bypass (31) in einer Parallelleitung (20) im Verbraucher-Kreislauf in Verbindung steht.

2. Fernwärme-Uebernahmestation zur Erwärmung von Heizungswasser in einem Verbraucher-Kreislauf, mit einem Wärmetauscher zur Wärmeübertragung von einem Fernwärmemedium, insbesondere Wasser, auf das Heizungswasser, dadurch gekennzeichnet, dass verbraucherseitig dem Wärmetauscher (2) ein zylinderförmiger Tank (5) nachgeschaltet ist, der eine dynamisch regelnde Heizungswassersäule (6) umschliesst und der einerseits über einen Primär-Vorlauf (7) und einen Primär-Rücklauf (8) mit der Sekundärseite des Wärmetauschers (2) einen Primär-Kreis (9) sowie andrerseits mit dem Verbraucher-Vorlauf (11) und dem Verbraucher-Rücklauf (12) einen Sekundär-Kreis (10) des Heizungswasser-Kreislaufes (1) bildet, wobei sich im Primär-Kreis (9) eine Umwälzpumpe (16) befindet und wobei eine Mehrzahl, niveauunterschiedlich am Tank (5) angeordnete Temperaturfühler (13) über eine Steuerstufe (14) ein Durchfluss-Regelventil (15) im Fernwärmewasser-Kreislauf (3, 4) steuern ; dass ferner die Steuerstufe (14) für das Durchfluss-Regelventil (15) für eine Temperaturdifferenz-Regelung mit einem weiteren Temperaturfühler (25) am Fernwärmewasser-Rücklauf (4) in Wirkungsverbindung steht und dass weiter sich die Umwälzpumpe (16) im Primär-Vorlauf (7) des Primär-Kreises (9) des Heizungswasser-Kreislaufes (1) befindet und von einer weiteren Temperatur-Differenz-Regelstufe (17) drehzahlgeregelt ist, die mit weiteren Temperaturfühlern (18, 19) am Vorlauf (3) des Fernwärmewasser-Kreislaufes (3, 4) resp. am Primär-Vorlauf (7) des Primär-Kreises (9) des Heizungswasser-Kreislaufes (1) in Wirkungsverbindung steht.

3. Fernwärme-Uebernahmestation nach Anspruch 2, dadurch gekennzeichnet, dass dem zylinderförmigen Tank (5) im Primär-Kreis (9) des Heizungswasser-Kreislaufes (1) eine Rücklaufleitung (20) parallelgeschaltet ist, welche über ein Umsteuerventil (21) in den Primär-Rücklauf (8) des Primär-Kreises (9) des Heizungswasser-Kreislaufes (1) einmündet.

4. Fernwärme-Uebernahmestation nach Anspruch 3, dadurch gekennzeichnet, dass das Umsteuerventil (21) von einer weiteren Temperatur-Differenz-Regelstufe (24) betätigbar ist, welche mit weiteren Temperaturfühlern (22, 23) am Primär-Vorlauf (7) des Primär-Kreises (9) des Heizungswasser-Kreislaufes (1) resp. am vorlaufseitigen Niveau des zylinderförmigen Tanks (5) in Wirkungsverbindung steht.

5. Fernwärme-Uebernahmestation nach Anspruch 2, dadurch gekennzeichnet, dass von den niveauunterschiedlichen Temperaturfühlern (13) am zylinderförmigen Tank (5) der niveau-unterste Fühler bei einer vorgegebenen Höchsttemperatur der Heizungswassersäule (6) eine Schliessung des Durchfluss-Regelventils (15) im Fernwärmewasser-Kreislauf (3, 4) und der niveauhöchste Fühler bei einer vorgegebenen Tiefsttemperatur der Heizungswassersäule (6) eine vollständige Oeffnung des Durchfluss-Regelventils (15) bewirkt, wogegen niveauzwischenliegende Temperaturfühler auf vorgegebene Zwischentemperaturen hin unterschiedliche Teilöffnungen des Durchfluss-Regelventils (15) bewirken.

## Claims

1. A taking-over station for long-distance heating for the heating of heating water in a receiver circuit, comprising a heat exchanger for the transmission of heat from a long-distance heating medium, in particular water, onto said heating water, characterized by a first temperature-difference-regulation step (17'), controlled by thermometer probe (19) in said receiver circuit (1), for regulating the temperature in said receiver circuit (1) via a flow-control valve (15) in the long-distance heating circuit, whereby said receiver circuit is in operative connection with thermometer probes (18, 25) in the flow line and return pipe of the long-distance heating circuit and by a second regulation step (17') for regulating the passage in said receiver circuit, said second regulation step is in operative connection with a variable-speed circulating pump (16) and a flow-control bypass (31) in a parallel pipe (20) of the receiver circuit.

2. A taking-over station for long-distance heating for the heating of heating water in a receiver circuit, comprising a heat exchanger for the transmission of heat from a long-distance heating medium, in particular water, onto said heating water, characterized in that a cylindrical tank (5) is subsequently added receiverend to said heat exchanger (2), said tank enclosing a dynamic regulating heating-water column (6) which forms on the one hand with the secondary winding of said heat exchanger (2), said primary circuit (9) via a primary flow line (7) and a primary return pipe (8), as well as forming on the other hand with said receiver flow line (11) and said receiver pipe (12), a secondary circuit (10) of said heating-water circuit (1), whereat a circulating pump (16) is disposed in said primary circuit (9), and a plurality of thermometer probes (13) are disposed at different levels on said tank (5), which control via a control stage (14) a flow-control valve (15) in said long-distance-heating-water circuit (3,4); further that said control stage (14) for said flow-control valve (15) is for a temperature differential control, in operative connection with a further thermometer probe (25) on said long-distance-heating-water return pipe (4); and further that said circulating pump (16) is disposed in said primary flow line (7) of said primary circuit (9) of said heating-water circuit (1) and the speed thereof is controlled by a further temperature-differential-controlled automatic control system (17) which is in operative connection with further thermometer probes (18, 19) on said flow line (3) of said long-distance-heating-water circuit (3, 4) and on said primary flow line (7) of said heating-water circuit (1).

3. The taking-over station for long-distance heating as defined in claim 2, characterized in that a return pipe (20) is in parallel with said cylindrical tank (5) in said primary circuit (9) of said heating-water circuit (1) and which discharges via a reversing valve (21) into said primary return pipe 8 of said primary circuit (9) of said heating-water circuit (1).

4. The taking-over station for long-distance heating as defined in claim 3, characterized in that said reversing valve (21) is operable by a further temperature-differential-controlled automatic control system (24) which is in operative connection with further thermometer probes (22, 23) on said primary flow line (7) of said primary circuit (9) of said heating-water circuit (1) and on the forward-flow-side level of said cylindrical tank (5) respectively.

5. The taking-over station for long-distance heating as defined in claim 2, characterized in that of the said level-different thermometer probes (13) on said cylindrical tank (5), the probe at the lowest level brings about, at a specified highest temperature, a closing of said flow-control valve (15) in said long-distance-heating-water circuit (3, 4) and, at a specified lowest temperature of said heating-water column (6), the probe at the highest level brings about a complete opening of said flow-control valve (15), whereas thermometer probes lying at an intermediate level bring about, at specified intermediate-level temperatures, variant partial openings of said flow-control valve (15).

## Revendications

1. Poste de raccordement de chauffage urbain pour le chauffage de l'eau de chauffage d'un circuit d'abonné, comportant un échangeur de chaleur pour le transfert de chaleur d'un fluide de chauffage urbain, notamment de l'eau, à l'eau de chauffage, caractérisé par un premier étage de régulation (17') de différence de température, commandé par une sonde de température (19) dans le circuit d'abonné, pour la régulation de la température dans le circuit d'abonné, par l'intermédiaire d'une vanne de régulation de débit (15) placée dans le circuit de chauffage urbain, l'étage de régulation étant relié à des sondes de température (18, 25) placées dans la conduite d'aller et la conduite de retour du circuit de chauffage urbain et par un deuxième étage de régulation (14') en vue de la régulation du débit dans le circuit d'abonné, lequel est relié à une pompe de circulation (16) à vitesse variable et à une dérivation de débit (31) dans une conduite parallèle (20) du circuit d'abonné.

2. Poste de raccordement de chauffage urbain pour le chauffage de l'eau de chauffage d'un circuit d'abonné, comportant un échangeur de chaleur pour le transfert de chaleur d'un fluide de chauffage urbain, notamment de l'eau, à l'eau de chauffage, caractérisé en ce que, côté abonné, un réservoir (5) cylindrique est monté en aval de l'échangeur de chaleur (2), lequel réservoir entoure une colonne d'eau de chauffage (6) à régulation dynamique et forme d'une part, par une conduite d'aller primaire (7) et une conduite de retour primaire (8), avec le côté secondaire de l'échangeur de chaleur (2), un circuit primaire (9) ainsi que d'autre part avec la conduite d'aller d'abonné (11) et la conduite de retour d'abonné (12), un circuit secondaire (10) du circuit d'eau de chauffage (1), une pompe de circulation (16) se trouvant dans le circuit primaire (9) et une pluralité de sondes de température (13) disposées à des niveaux différents sur le réservoir (5), commandant une vanne de régulation de débit (15) dans le circuit d'eau de chauffage urbain (3, 5), par un étage de commande (14), en ce qu'en outre l'étage de commande (14) pour la vanne de régulation de débit (15) est en liaison active avec une autre sonde de température (25) de la conduite de retour d'eau de chauffage urbain (4), en vue d'une régulation de la différence de température et en ce qu'en outre, la pompe de circulation (16) se trouve dans la conduite d'aller primaire (7) du circuit primaire (9) du circuit d'eau de chauffage (1) et en ce que sa vitesse de rotation est réglée par un autre étage de régulation de différence de température (17), lequel étage de régulation est en liaison active avec d'autres sondes de température (18, 19) de la conduite d'aller (3) du circuit d'eau de chauffage urbain (3, 4) ou de la conduite d'aller primaire (7) du circuit primaire (9) du circuit d'eau de chauffage (1).

3. Poste de raccordement de chauffage urbain selon la revendication 2, caractérisé en ce qu'une conduite de retour (20) est montée en parallèle au réservoir (5) cylindrique du circuit primaire (9) du circuit d'eau de chauffage (1), laquelle conduite de retour débouche, par une vanne de commutation (21), dans la conduite de retour primaire (8) du circuit primaire (9) du circuit d'eau de chauffage (1).

4. Poste de raccordement de chauffage urbain selon la revendication 3, caractérisé en ce que la vanne de commutation (21) est actionnée par un autre étage de régulation de différence de température (24) qui est en liaison active avec d'autres sondes de température (22, 23) de la conduite d'aller primaire (7) du circuit primaire (9) du circuit d'eau de chauffage (1), ou du niveau côté aller du réservoir (5) cylindrique.

5. Poste de raccordement de chauffage urbain selon la revendication 2, caractérisé en ce que, parmi les sondes de température (13) placées à des niveaux différents du réservoir (5) cylindrique, la sonde de niveau le plus bas provoque une fermeture de la vanne de régulation de débit (15) du circuit d'eau de chauffage urbain (3, 4) pour une température maximale donnée de la colonne d'eau de chauffage (6) et la sonde de niveau le plus haut provoque une ouverture totale de la vanne de régulation de débit (15) pour une température minimale donnée de la colonne d'eau de chauffage (6), tandis que les sondes de température situées à des niveaux intermédiaires entraînent des ouvertures partielles différentes de la vanne de régulation de débit (15), pour des températures intermédiaires données.

Fig.1

Fig. 2